# EUROPÄISCHE PATENTSCHRIFT

(11) **EP 1 809 885 B1**
(45) Veröffentlichungstag und Bekanntmachung des Hinweises auf die Patenterteilung: **10.11.2010**
(21) Anmeldenummer: 05803580.9
(22) Anmeldetag: 29.09.2005
(51) Int. Cl.: F02F 3/00, F02F 3/22

(54) **EINFACH-REIBSCHWEISSUNG**
SIMPLE FRICTION WELD
PROCEDE SIMPLE DE SOUDAGE PAR FRICTION

(30) Priorität: 29.09.2004 DE 102004047842; 22.12.2004 DE 102004061778
(43) Veröffentlichungstag der Anmeldung: 25.07.2007
(73) Patentinhaber: KS Kolbenschmidt GmbH, 74172 Neckarsulm (DE)
(72) Erfinder: GNIESMER, Volker, 31061 Alfeld (DE); LUZ, Gerhard, 74226 Nordheim (DE); MÜLLER, Jochen, 74632 Neuenstein (DE); SCHALLER, Christian, 74842 Billigheim (DE); SCHMITZ, Ernst, Peter, 73453 Abtsgmünd (DE); KOLBE, Peter, 73434 Aalen (DE); DAMBACHER, Josef, 73450 Neresheim (DE)
(74) Vertreter: Greif, Thomas
(86) Internationale Anmeldenummer: PCT/EP2005/010535
(87) Internationale Veröffentlichungsnummer: WO 2006/034862

(56) Entgegenhaltungen:
- EP-A- 1 061 249
- US-A- 5 070 768
- US-A- 6 032 619
- US-A1- 2004 144 247
- US-B1- 6 698 391
- PATENT ABSTRACTS OF JAPAN Bd. 014, Nr. 291 (M-0989), 22. Juni 1990 (1990-06-22) & JP 02 091452 A (HINO MOTORS LTD), 30. März 1990 (1990-03-30)

## Beschreibung

Die Erfindung betrifft einen einteiligen geschweißten Kühlkanal-Stahlkolben aus geschmiedetem Stahl gemäß den Merkmalen des Oberbegriffes des Patentanspruches 1.

Die Aufgabe der Erfindung liegt darin, einen über den bekannten Stand der Technik hinausgehenden Kolben zu entwickeln, bei dem der Kühlkanal oder auch Kühlraum dicht verschlossen ist. Ein derartiger Kolben ist beispielsweise in der unveröffentlichten deutschen Patenanmeldung DE 10 2004 038 465.7 beschrieben.

Aus der schon vorveröffentlichten deutschen Patentanmeldung DE 102 44 512 A1 ist ein Kühlkanalkolben mit den gattungsbildenden Merkmalen bekannt. Dort weist das Kolbenoberteil koaxial hinter dem Ringfeld radial umlaufende Stege auf, die mit korrespondierenden Stegen des Kolbenschaftes mittels eines Reibschweißverfahrens verbunden werden. Die untere Stirnseite des Ringfeldes wird nach dem Zusammenfügen von Kolbenoberteil und Kolbenunterteil benachbart zu der radial oberen umlaufenden Stirnseite des Kolbenschaftes angeordnet. Dabei bilden im verbundenen Zustand von Kolbenober- und -unterteil die äußeren Kolbenwandbereiche zwischen beiden Kolbenteilen eine Auflagefläche aus, die durch einen wenige zehntelmillimeter bereiten Spalt gekennzeichnet ist. Dieser kann offen bleiben oder mittels eines temperaturbeständigen Dichtungsringes, der vor dem Fügen beider Kolbenteile auf einer der Auflageflächen, beispielsweise der des Kolbenunterteiles, positioniert wird, abgedichtet sein. Ein solcher Dichtungsring hat zwar den Vorteil, dass der Kühlkanal damit dichtend verschlossen wird, jedoch stellt er in nachteiliger Weise ein weiteres Bauteil dar, welches hergestellt und beim Zusammenfügen der beiden Kolbenteile lagerichtig positioniert werden muss. Außerdem hat der Dichtungsring, genauso wie der wenige zehntelmillimeter breite Spalt ohne Dichtungsring den Nachteil, dass sich das Kolbenoberteil (Kolbenboden) im Betrieb des Kolbens nicht auf den unteren Teil des Kolbens (Kolbenschaft) abstützen kann. Dabei wird der Kolbenboden im Betrieb durch die auf ihn wirkenden Verbrennungsdrücke in nachteiliger Weise verformt, so dass dadurch die Festigkeit und Dauerhaltbarkeit des Kolbens beeinträchtigt ist.

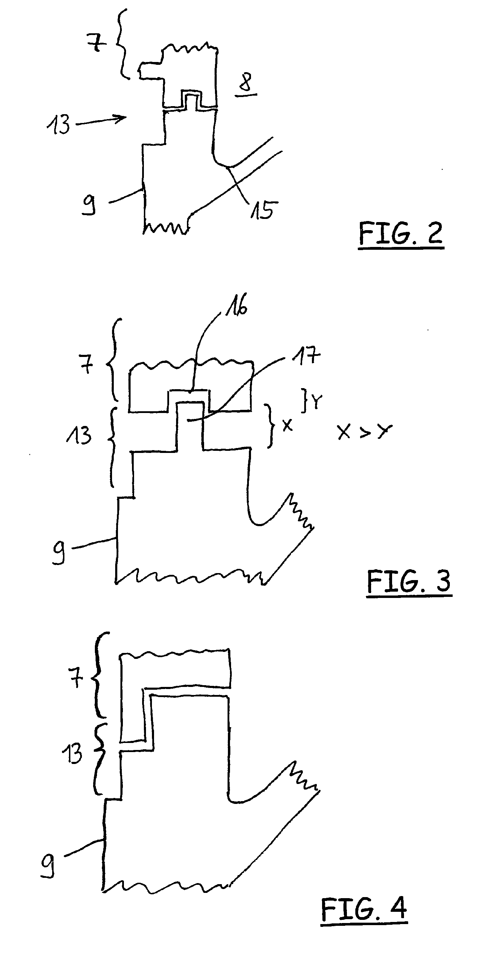

Aus der EP-A-1 061 249 ist ein Kühlkanalkolben einer Brennkraftmaschine bekannt, aufweisend einen Kolbenboden und einen daran mittels eines Reibschweißverfahrens gefügten Kolbenschaft, die zusammen einen Kühlkanal bilden, wobei eine den Kühlkanal radial nach außen begrenzende Ringwand von dem Kolbenboden und/oder dem Kolbenschaft gebildet ist und die Ringwand dichtend kraft- und/oder formschlüssig verschließbar ist, nachdem Kolbenboden und Kolbenschaft zusammengefügt wurden. Ausweislich der Figuren 2 bis 5 sind die zueinander gerichteten Flächen des Ringfeldes und des Kolbenschaftes radial umlaufend und planparallel zueinander. Die planparallel zueinander gerichteten Flächen an der Unterkante des Ringfeldes und der Oberkante des Kolbenschaftes weisen keinerlei Absätze auf, so dass im Betrieb des Kühlkanalkolbens keine ausreichende Abstützung des Kolbenbodens auf den Kolbenschaft gegeben ist. Lediglich in Figur 6 ist gezeigt, dass der nach oben weisende Abschluss des Kolbenschaftes einen einzigen Absatz aufweist, an dem der planparallel ausgerichtete untere Teil des Ringfeldes zur Anlage gelangen kann. Damit ist zwar die Abstützwirkung verbessert, aber noch nicht optimal. Außerdem ist die nach innen gerichtete L-Form des Absatzes am oberen Ende des Kolbenschaftes äußerst schwierig und nur aufwendig mit der geforderten Präzision herstellbar, so dass der EP-A-1 061 249 keine praxistaugliche Lösung zu entnehmen ist.

Aus der US 2004/144247 A1 und US-B1-6698391 sind ebenfalls gattungsgemäße Kühlkanalkolben bekannt, bei denen jeweils allerdings die Unterkante der Ringfeld und die daran zu der Anlage kommende Oberkante des Kolbenschaftes radial umlaufend ebenfalls nur planparallel ausgebildet sind, so dass die Abstützwirkung nicht offenbart ist.

Der Erfindung liegt daher die Aufgabe zugrunde, einen Kühlkanalkolben bereitzustellen, der die eingangs geschilderten Nachteile wirksam vermeidet.

Die Aufgabe der Erfindung wird dahingehend gelöst, dass zunächst das Ober- und Unterteil des Kühlkanal-Stahlkolbens mittels Reibschweißens oder Widerstandspreßschweißens zusammengefügt werden, wobei eine den Kühlkanal nach außen begrenzende Ringwand zunächst keine stoffschlüssige Verbindung bildet und das dichte Verschließen der Ringwand des Kühlkanals mittels eines Kraft- und/oder Formschlusses, insbesondere eines nachfolgenden Schweißprozesses, erfolgt. Durch die erfindungsgemäße Gestaltung des Kühlkanal-Stahlkolbens, wobei die Fügeteile, das heißt Kolbenboden und Kolbenschaft, mittels Reibschweißen oder Widerstandspreßschweißen gefügt werden, ist nun ein vorteilhaftes Fügen und Verschließen des Kühlkanals möglich. Hierbei wirkt die äußere nachträgliche Schweißung (nicht Reibschweißung) beziehungsweise die entsprechende Formgebung der Ringwand dahingehend auf den Kühlkanal ein, dass im Bereich der Ringwand keine Grate vom Reibschweißen in den Kühlkanal hineinreichen. Durch das nachträgliche Verschweißen der äußeren Ringwand bzw. allgemein durch den Kraft- und/oder Formschluß wird der Kolben im Bereich des Ringfeldes unterstützt, d.h. die auf den Kolbenboden wirkenden Kräfte können so auf den Kolbenschaft übertragen werden, was die Festigkeit und Haltbarkeit des Kühlkanalkolbens wesentlich erhöht. Gleichzeitig wirkt die Verschweißung ebenfalls einer Verformung im Schaftbereich, und dort insbesondere im oberen Bereich, entgegen. Außerdem werden Fertigungstoleranzen zwischen Ober- und Unterteil ausgeglichen. Außerdem ist erfindungsgemäß vorgesehen, dass sowohl die Stirnseite der Ringwand unterhalb des Ringfeldes als auch die angrenzende Stirnseite der Ringseite oberhalb des Kolbenschafts einen jeweils korresponierenden Absatz aufweisen. Dadurch ist sowohl im Falle der kraftschlüssigen als auch im Falle der formschlüssigen Verbindung der Kühlkanal dichtend verschlossen und in dem Anlage- oder Fügebereich die Abstützung des Kolbenbodens auf dem Kolbenschaft optimiert.

Durch den lediglich aus Kolbenboden und Kolbenschaft gebildeten Kolben kann auf weitere Einschweißteile verzichtet werden, was die Herstellung eines efindungsgemässen Kühlkanal-Kolbens wesentlich erleichtert. Darüber hinaus ist ein Vorteil der Erfindung, dass je nach Ausbildung des Fügebereichs im Bereich der Ringwand dieser Fügebereich zur Stabilisierung und Positionierung der Fügeteile während des Reibschweißens dienen kann. Eine Kostenersparnis ergibt sich gleichzeitig dadurch, dass auf eingeschweißte Abschlußbauteile im Bereich des Kühlkanals verzichtet werden kann.

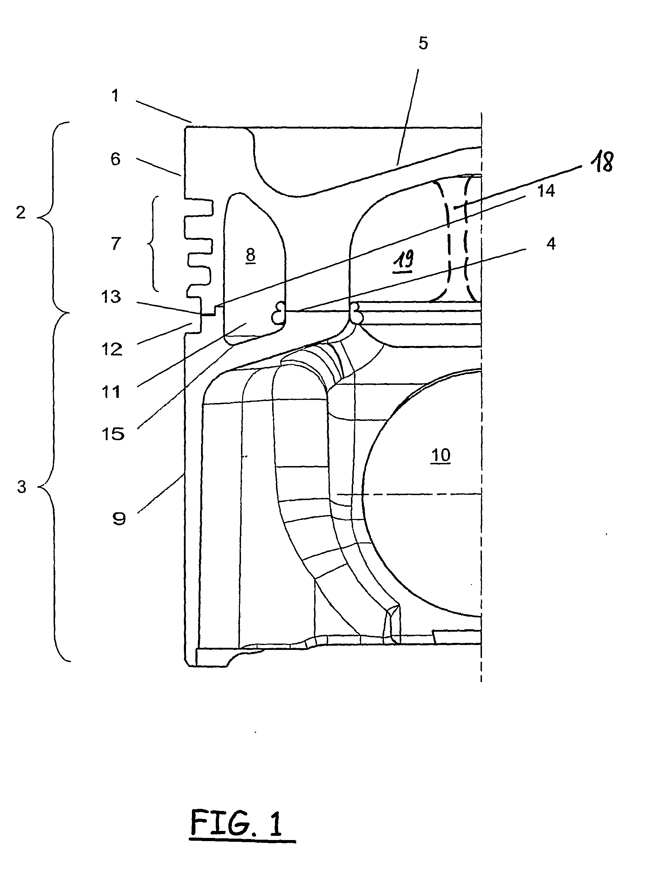

Im Folgenden wird die Erfindung anhand eines Ausführungsbeispieles, auf das die Erfindung jedoch nicht beschränkt ist, beschrieben und durch die Figuren 1 bis 4 erläutert.

Figur 1 zeigt den Schnitt durch einen einteiligen, geschweißten Kühlkanal-Stahlkolben, insbesondere aus geschmiedetem Stahl.

In der Figur 1 ist eine Hälfte einer Schnittansicht eines Kolbens und insbesondere eines Kühlkanalkolbens 1 einer Brennkraftmaschine dargestellt. Der hier dargestellte Kühlkanalkolben 1 besteht aus einem Kolbenboden 2 und einem Kolbenschaft 3, die mittels eines Reibschweißverfahrens, das zu einer Reibschweißnaht 4 führt, verbunden sind. Der Kolbenboden 2 wird dabei von einer Brennraummulde 5, einem Feuersteg 6, einem Ringfeld 7 und einem Teil eines Kühlkanals 8 gebildet. Der Bereich des Kolbenschaftes 3 umfasst eine äußere Schaftfläche 9 des Kühlkanalkolbens 1, eine Bolzenbohrung 10 und einen unteren Teil 11 des Kühlkanals 8. Der Kühlkanal 8 wird folglich aus einen oberen und unteren Bereich 11 des Kolbenbodens 2 und des Kolbenschaftes 3 und einem zurückgesetzten, umlaufenden Steg des Kolbenbodens 2 und des Kolbenschaftes 3 gebildet.

Unterhalb des Ringfeldes 7 ist in diesem Ausführungsbeispiel eine weitere Nut 12 in die äußere Oberfläche des Kolbens 1 eingebracht. Nach dem Fügen des Kolbenbodens 2 und des Kolbenschaftes 3 mittels eines Reibschweißvorgangs liegen die beiden Kolbenteile 2, 3 im Bereich der Ringwand 13 lediglich aneinander an, ohne dass eine stoffschlüssige und / oder dichte Verbindung im Bereich dieser Ringwand 13 besteht. Das Fügen der Ringwand 13 erfolgt in einem nachgeordneten zusätzlichen Schweißprozeß. Hierbei sind die verschiedensten Schweißverfahren (aber nicht Reibschweißen), wie beispielsweise Elektronenstrahlschweißen, WIG-Schweißen, MIG-Schweißen, MAG-Schweißen, Laser-Schweißen, etc, vorstellbar.

In dieser Ausführungsform ist im Fügebereich der Ringwand 13 ein Absatz 14 eingearbeitet, der den Vorteil aufweist, dass bei einem Verschweißen der Ringwand 13 die Schweißnahtwurzel nicht in den Kühlkanal 8 hineinreicht und dass darüber hinaus durch ein Aufschweißen des Absatzes 14 ein dichtes Schweißes ermöglicht und eine saubere porenfreie Wurzel erzeugt ist.

Die Ausführung des Absatzes 14 ist nicht auf diese Ausführungsform beschränkt, sondern es ist ebenso vorstellbar, im Bereich der Ringwand 13 andere Formen von Absätzen 14 auszubilden, die einerseits den nachträglichen Schweißprozeß unterstützen oder sich positiv auf das Reibschweißen auswirken.

Ein weiterer Vorteil des nachträglichen Verschweißens der Ringwand 13 ist der, dass bis unmittelbar vor dem letztendlichen Zusammenfügen des Kolbenbodens 2 und des Kolbenschaftes 3, durch den Spalt in der Ringwand 13 Schutzgase in den Bereich der Reibschweißnaht 4 hineingelangen können, die sich wiederum positiv auf das Werkstoffgefüge in der Reibschweißnaht 4 auswirken. Die Lage des Absatzes 14 im Bereich der Ringwand 13 ist lediglich beispielhaft genau in die Mitte der Nut 12 gelegt. Vorteilhafterweise liegt dieser Absatz 14 aber unterhalb des Ringfeldes 7 und oberhalb des unteren Endes 15 des Kühlkanals 8. Es ist erfindungsgemäß auch vorstellbar, keine Nut 12 in den Kolben 1 einzubringen und die Ringwand 13 eben mit der Schaltfläche 9 auszubilden.

Mit Blick auf die Figur 1 sei noch einmal darauf hingewiesen, dass die Ringwand 13 von dem unteren stirnseitigen Ende des Ringfeldes 7 und dem oberen Absatz des Kolbenschafts 3 gebildet wird. Aufgrund der in Figur 1 gezeigten Geometrie im Bereich der Ringwand 13 ist das Schweißverfahren besonders günstig auszuführen. Die jeweils korrespondierenden Absätze der zugewanden Stirnseiten verhindern, wie schon ausgeführt, dass sich die Schweißnaht in Richtung des Kühlkanals 8 ausbilden kann. Daneben bleibt der Vorteil des radial außen durchzuführenden Schweißverfahrens bestehen, dass nämlich die nach radial außen abstehende Schweißnaht beispielsweise durch eine spanabhebende Bearbeitung beseitigt werden kann. Neben dieser in Figur 1 gezeigten Geometrie der Ringwand 13 ist es auch denkbar, dass der obere Teil des Kolbenschafts 3 ein Plateau aufweist, auf dem nach dem Reibschweiß-Vorgang die untere Stirnseite des Ringfeldes 7 zur Anlage kommt. Ebenso ist es denkbar, dass das Ringfeld 7 an dem Kolbenschaft 3 angeordnet ist und zur Anlage an einer unteren Stirnfläche unterhalb des Feuerstegs 6 zu liegen kommt. Auch bei diesen beschriebenen Geometrien bleiben die Eingangs genannten Vorteile bestehen. Wichtig und vorteilhaft ist aber das Grundprinzip der vorliegenden Erfindung, dass nämlich der Kolbenboden 2 und der Kolbenschaft 3 von der äußeren Oberfläche zurück gesetzte radial umlaufende ausgebildete Stege aufweisen, die mittels des Reibschweißverfahrens zusammen gefügt werden, während direkt an der äußeren Oberfläche des Kühlkanalkolbens 1 die Ringwand 13 vorhanden ist, die so gestaltet ist, dass die aneinander grenzenden Stirnseiten der Ringwand 13 (des Kolbenbodens 2 und / oder des Kolbenschaftes 3) beim Reibschweißverfahren noch keine stoffliche Verbindung eingehen. Erst wenn Kolbenboden 2 und Kolbenschaft 3 über ihre innenliegenden Stege mittels des Reibschweißverfahrens zusammengefügt wurden sind, erfolgt in einem weiteren Arbeitsschritt das Verschweißen der aneinander grenzenden Stirnseiten der Ringwand 13 von außen.

Figur 2 zeigt noch den Bereich der Ringwand 13, wobei der nach unten ragende Teil der Stirnseite des Ringfeldes 7 nutförmig ausgebildet ist, in die ein nach oben weisender radial umlaufender Absatz oberhalb der Stirnseite des Kolbenschafts 9 eingreift. Auch hier erfolgt anschließend wieder ein verschweißen der aneinander liegenden Stirnseiten der Ringwand 13 von außen. Dadurch wird der Kühlkanal 8 komplett verschlossen, es erfolgt eine Unterstützung des Ringfeldes 7 gegen Verformungen im Betrieb des Kühlkanalkolbens 1, eben so wie eine Unterstützung des Kolbenschafts 3 gegen Verformungen insbesondere im oberen Bereich erfolgt.

Figur 3 zeigt ausschnittsweise den Bereich der Ringwand 13, wobei der unterer umlaufende Abschnitt des Ringfeldes 7 und der obere umlaufende Abschnitt des Kolbenschaftes 9 dargestellt sind. Bei der Ausgestaltung gemäß Figur 3 sind die Stirnseite der Ringwand 13 unterhalb des Ringfeldes 7 und die angrenzende Stirnseite der Ringseite 13 oberhalb des Kolbenschaftes 9 nutförmig ähnlich wie gemäß Figur 2 ausgebildet, jedoch mit der Besonderheit, dass die umlaufende Feder 17 eine Höhe X aufweist, die größer ist als die Tiefe Y der Nut 16. Dabei wird bei der Herstellung des Kühlkanalkolbens 1 so vorgegangen, dass Kolbenboden 2 und Kolbenschaft 3, wie schon beschrieben, mittels des Reibschweiß- bzw. des Widerstandspreßverfahrens zusammengefügt werden und dabei die beiden Stirnseiten der Ringwand 13 gemäß Figur 3 auf Abstand (mit einem Spalt) noch nicht zur Anlage kommen.
Anschließend erfolgt ein Zusammendrücken des Kühlkanalkolbens 1 von oben und von unten, also in Richtung der Kolbenhubachse. Dabei kommen die einander zuweisenden Stirnflächen der Unterseite des Ringfeldes 7 und der Oberseite des Kolbenschaftes 9 zur Anlage, wobei gleichzeitig auch die radial umlaufende Feder 17 innerhalb der radial umlaufenden Nut 16 verformt wird, so dass es zu einem Kraft- und Formschluß im Bereich der Ringwand 13 kommt, wodurch gewährleistet ist, dass der Kühlkanal 8 dichtend verschlossen wird und gleichzeitig sich der Kolbenboden 2 in Richtung des Kolbenschaftes 9 auf diesem abstützen kann. In einer bevorzugten Ausführungsform reicht dieser Kraft- und Formschluß aus, wobei es auch hier denkbar ist, den Anlagebereich im Bereich der Ringwand 13 stoffschlüssig mittels eines Schweißverfahrens zusätzlich noch zu verstärken.

Ähnliches gilt bei der Ausführungsform gemäß Figur 4, wobei hier die Stirnseite der Ringwand 13 unterhalb des Ringfeldes 7 und die angrenzende Stirnseite der Ringseite 13 oberhalb des Kolbenschaftes 9 einen jeweils korrespondierenden Absatz aufweisen. Auch hier liegen nach dem Zusammenfügen von Kolbenboden 2 und Kolbenschaft 3 die zueinander gewandten Stirnseiten zunächst nicht aneinander an, sondern es hat sich ein Spalt gebildet. Zur Beseitigung des Spaltes zur Erreichung der Dichtung des Kühlkanales 8 und der Kraftabstützung des Kolbenbodens 2 auf dem Kolbenschaft 3 wird der Kühlkanalkolben 1 wieder von oben bzw. unten mit einer Kraft beaufschlagt, damit sich im Bereich der Anlageflächen ein Kraft- bzw. Formschluß einstellt. Damit ist der Kühlkanal 8 dichtend verschlossen und die Kraftabstützung gegeben, so dass, im Gegensatz zu der Ausführungsform gemäß Figur 1, ein Schweißvorgang im Bereich der Ringwand 13 unterbleiben kann.

Zusammenfassend wird noch einmal darauf hingewiesen, dass zunächst der Kolbenboden 2 mittels eines Reibschweißverfahrens oder eines Widerstandspreßschweißverfahrens mit dem Kolbenschaft 3 zusammengefügt werden. Dabei erfolgt diese Fügung in einem gegenüber dem Ringfeld 7 deutlich zurückgesetzten Bereich, der sich zur Erzielung der ausreichenden Stabilität koaxial zwischen der Rückseite des Ringfeldes 7 und dem äußeren Umfang der Brennraummulde 5 befindet. Nach diesem Zusammenfügen von Kolbenboden 2 und Kolbenschaft 3 ist die Ringwand13 (also der Bereich unterhalb des Ringfeldes 7 und oberhalb des Kolbenschaftes 9) mittels Kraft- und/oder Formschluß so verschlossen, dass einerseits der Kühlkanal 8 dichtend verschlossen ist und andererseits sich der Kolbenboden 2 derart auf den Kolbenschaft 3 abstützen kann, dass die Verformung des Kolbenbodens 2 im Betrieb des Kühlkanalkolbens 1 deutlich reduziert ist, da die auf dem Kolbenboden 2 wirkenden Verbrennungsdrücke bzw. Kräft auf den Kolbenschaft 9 übergeleitet werden können. In diesem Fall kann der Anlagebereich im Bereich der Ringwand 13 noch stoffschlüssig mittels eines Schweißverfahrens verbunden werden, wobei dies aber im Regelfall entbehrlich ist.

Alternativ oder ergänzend dazu sind die geometrischen Verhältnisse nach dem Zusammenfügen von Kolbenboden 2 und Kolbenschaft 3 so, dass die Stirnseiten unterhalb des Ringfeldes 7 und oberhalb des Kolbenschaftes 9 noch nicht aneinander liegen, sondern sich ein Spalt gebildet hat. Um den Kühlkanal 8 abzudichten und die Kraftabstützung des Kolbenbodens 2 auf dem Kolbenschaft 3 zu gewährleisten, wird nun dieser Bereich der Ringwand 13 in erfindungsgemäßer Weise formschlüssig mittels eines Schweißverfahrens, wie schon beschrieben, verschlossen. Hierbei können die einander zugewandten Stirnseiten flächig ausgebildet sein, oder aus anderen geometrischen Formen (wie beispielsweise absatzförmig gemäß Figur 3 oder Feder-Nut-förmig wie Figur 3) versehen sein.

In Bezug auf Figur 1 wird noch ergänzend darauf hingewiesen, dass im Innenbereich des Kühlkanakolbens 1 noch zumindest ein weiterer, radial umlaufender Steg 18 vorhanden sein kann, aber nicht muss. Dieser mit dem Kühlkanalkolben 1 herstellbare oder als separates Bauteil mit dem Kühlkanalkolben 1 verbindbare Steg 18 bildet dann zumindest einen weiteren Kühlkanal 19, wobei auch zusätzlich zu den beiden Kühlkanälen 8, 19, die auch als Kühlkammern bezeichnet werden können, zentrisch im Innenbereich des Kühlkanalkolbens 1 ein Kühlmedium dauerhaft oder zirkulierend einbringbar ist. Nicht gezeigt, aber vorhanden, sind einerseits Mittel, mit denen das Kühlmedium in den Kühlkanal oder die Kühlkanäle eingespritzt werden kann, genauso wie andererseits die hierfür nötigen Öffnungen wie zum Beispiel Bohrungen an der Unetrseite des Innenbereiches oder auch innerhalb der die Kühlkanäle trennenden Stege.

### Bezugszeichenliste

- 1.: Kühlkanalkolben
- 2.: Kolbenboden
- 3.: Kolbenschaft
- 4.: Reibschweißnaht
- 5.: Brennraummulde
- 6.: Feuersteg
- 7.: Ringfeld
- 8.: Kühlkanal
- 9.: Schaftfläche
- 10.: Bolzenbohrung
- 11.: unterer Bereich
- 12.: Nut
- 13.: Ringwand
- 14.: Absatz
- 15.: unteres Ende
- 16.: Nut
- 17.: Feder
- 18.: Steg
- 19.: Kühlkanal

## Patentansprüche

1. Kühlkanalkolben (1) einer Brennkraftmaschine, aufweisend einen Kolbenboden (2) und einen daran mittels eines Reibschweißverfahrens oder Widerstandspreß-Schweißverfahrens gefügten Kolbenschaft (3), die zusammen einen Kühlkanal (8) bilden, wobei eine den Kühlkanal (8) radial nach außen begrenzende Ringwand (13) von dem Kolbenboden (2) und/oder dem Kolbenschaft (3) gebildet ist und die Ringwand (13) dichtend kraft- und/oder formschlüssig verschließbar ist, nachdem Kolbenboden (2) und Kolbenschaft (3) zusammengefügt wurden, **dadurch gekennzeichnet, dass** die Stirnseite der Ringwand (13) unterhalb des Ringfeldes (7) und die angrenzende Stirnseite der Ringseite (13) oberhalb des Kolbenschafts (9) einen jeweils korrespondierenden Absatz aufweisen

2. Kühlkanalkolben (1) nach Anspruch 1, **dadurch gekennzeichnet, dass** die Ringwand (13) dichtend formschlüssig mittels eines Schweißverfahrens, ausgeschlossen ein Reibschweißverfahren, verschließbar ist.

3. Kühlkanalkolben (1) nach Anspruch 1 oder 2,**dadurch gekennzeichnet, dass** die Stirnseite der Ringwand (13) unterhalb des Ringfeldes (7) und die angrenzende Stirnseite der Ringseite (13) oberhalb des Kolbenschafts (9) nutförmig ausgebildet sind.

4. Kühlkanalkolben (1) nach Anspruch 3, **dadurch gekennzeichnet, dass** eine umlaufende Nut (16) in der unteren Stirnseite des Ringfeldes (7) eine geringere Tiefe (X) aufweist, als eine umlaufende Feder (17) eine Höhe (Y) aufweist und die Feder (17) nach dem Zusammenfügen von Kolbenboden (2) und Kolbenschaft (3) verformbar ist.

5. Kühlkanalkolben (1) nach einem der Ansprüche 1 bis 4, **dadurch gekennzeichnet, dass** im Innenbereich des Kühlkanakolbens (1) zumindest ein weiterer, radial umlaufender Steg (18) zur Bildung zumindest eines weiteren Kühlkanales (19) vorhanden ist.

## Claims

1. Cooling-duct piston (1) of an internal combustion engine, having a piston crown (2) and a piston skirt (3) which is joined thereto by means of a friction welding process or resistance welding process, which piston crown (2) and piston skirt (3) together form a cooling duct (8), with an annular wall (13) which delimits the cooling duct (8) radially to the outside being formed by the piston crown (2) and/or the piston skirt (3) and with it being possible for the annular wall (13) to be sealingly closed off in a non-positively and/or positively locking fashion after the piston crown (2) and piston skirt (3) have been joined together, **characterized in that** the end side of the annular wall (13) below the ring area (7) and the adjoining end side of the annular wall (13) above the piston skirt (9) have an in each case corresponding shoulder.

2. Cooling-duct piston (1) according to Claim 1, **characterized in that** the annular wall (13) can be sealingly closed off in a positively locking fashion by means of a welding process other than a friction welding process.

3. Cooling-duct piston (1) according to Claim 1 or 2, **characterized in that** the end side of the annular wall (13) below the ring area (7) and the adjoining end side of the annular wall (13) above the piston skirt (9) are formed in the manner of grooves.

4. Cooling-duct piston (1) according to Claim 3, **characterized in that** an encircling groove (16) in the lower end side of the ring area (7) has a smaller depth (X) than the height (Y) of an encircling tongue (17), and the tongue (17) can be deformed after the piston crown (2) and piston skirt (3) are joined together.

5. Cooling-duct piston (1) according to one of Claims 1 to 4, **characterized in that** at least one further, radially encircling web (18) for forming at least one further cooling duct (19) is provided in the inner region of the cooling-duct piston (1).

## Revendications

1. Piston à canal de refroidissement (1) d'un moteur à combustion interne, présentant un fond de piston (2) et une tige de piston (3) assemblée à celui-ci au moyen d'un procédé de soudage par friction ou de soudage par pressage à résistance, lesquels forment ensemble un canal de refroidissement (8), une paroi annulaire (13) limitant radialement vers l'extérieur le canal de refroidissement (8) étant formée par le fond de piston (2) et/ou la tige de piston (3) et la paroi annulaire (13) pouvant être fermée de manière hermétique par engagement par force et/ou par correspondance géométrique, après que le fond de piston (2) et la tige de piston (3) ont été assemblés, **caractérisé en ce que** le côté frontal de la paroi annulaire (13) sous le champ annulaire (7) et le côté frontal adjacent de la paroi annulaire (13) au-dessus de la tige de piston (9) présentent un épaulement correspondant respectif.

2. Piston à canal de refroidissement (1) selon la revendication 1, **caractérisé en ce que** la paroi annulaire (13) peut être fermée de manière hermétique par engagement par correspondance géométrique au moyen d'un procédé de soudage, à l'exception d'un procédé de soudage par friction.

3. Piston à canal de refroidissement (1) selon la revendication 1 ou 2, **caractérisé en ce que** le côté frontal de la paroi annulaire (13) sous le champ annulaire (7) et le côté frontal adjacent de la paroi annulaire (13) au-dessus de la tige de piston (9) sont réalisés sous forme de rainure.

4. Piston à canal de refroidissement (1) selon la revendication 3, **caractérisé en ce qu'**une rainure périphérique (16) dans le côté frontal inférieur du champ annulaire (7) présente une plus faible profondeur (X), qu'un ressort périphérique (17) présente une hauteur (Y) et le ressort (17) peut être déformé après l'assemblage du fond de piston (2) et de la tige de piston (3).

5. Piston à canal de refroidissement (1) selon l'une quelconque des revendications 1 à 4, **caractérisé en ce que** dans la région intérieure du piston à canal de refroidissement (1) est prévue au moins une nervure (18) supplémentaire radialement périphérique pour former au moins un canal de refroidissement (19) supplémentaire.
